# EUROPÄISCHE PATENTSCHRIFT

(11) **EP 0 841 547 B1**
(45) Veröffentlichungstag und Bekanntmachung des Hinweises auf die Patenterteilung: **19.01.2005**
(21) Anmeldenummer: 97114102.3
(22) Anmeldetag: 15.08.1997
(51) Int. Cl.: G01F 15/18, G01F 15/14, G01F 1/06, A47J 31/40, A47J 31/44, A47J 31/46

(54) **Durchflussmessgerät**
Flowmeter
Débitmètre

(30) Priorität: 15.08.1996 DE 29614076 U
(43) Veröffentlichungstag der Anmeldung: 13.05.1998
(73) Patentinhaber: DIGMESA AG, 2563 Ipsach (CH)
(72) Erfinder: Plüss, Heinz, 3322 Schönbühl (CH)
(74) Vertreter: Lempert, Jost, Dipl.-Phys. Dr. rer.nat.

(56) Entgegenhaltungen:
- DE-A- 3 442 358
- FR-A- 2 544 187

## Beschreibung

Die Erfindung betrifft ein Durchflußmeßgerät zum Messen von Durchflußmengen von Flüssigkeiten, insbesondere für Getränke, wie Kaffee, Espresso od.gl., insbesondere für eine Vorrichtung zum Bereiten von Getränken, wie eine Kaffee- oder Espresso-Maschine, mit einem aus Ober- und Unterteil bestehenden Meßgehäuse mit Ein- und Auslaßstutzen sowie einem im Inneren des Gehäuses angeordneten Meßkörper zur Bestimmung des Durchflusses der Flüssigkeit, wobei der Auslaßstutzen am Oberteil des Meßgehäuses festgelegt ist.

Ein gattungsgemäßes Durchflußmeßgerät ist aus dem DE-GM 87 07 150 bekannt. Bei diesem Meßgerät ist die Öffnung des Auslaßstutzens an einer Stirnseite des Gehäuses oberhalb der Meßflügel eines den Meßkörper darstellenden Flügelmeßrades angeordnet, damit sich im Bereich des Flügelmeßrades keine Luftblasen bilden können, die die Drehung des Rades behindern und so zu Meßungenauigkeiten führen. Dieses tritt insbesonders durch Leersaugen des Vorratstanks und sogleich erneutem Auffüllen desselben auf. Ein solches Durchflußmeßgerät arbeitet grundsätzlich hinreichend genau und zufriedenstellend, da bei erneuter Flüssigkeitszufuhr sofort und zuverlässig durch den stirnseitig angeordneten Auslaß die Luft aus dem Meßgerät austreten kann. Die Festlegung des Gehäuseoberteils und damit auch des Auslaßstutzens am Meßgerät erfolgt durch Verschrauben des Oberteils am Unterteil. Die Schraubverbindungen sind dabei derart angeordnet, daß das Gehäuseoberteil und damit der Auslaßstutzen lediglich in einer festen Stellung am Gehäuseunterteil festgelegt werden kann. Die mit dem Auslaßstutzen zu verbindende Saugpumpe zur Zuführung der Flüssigkeit an einen Durchlauferhitzer einer Kaffee- oder Espresso-Maschine kann ihren Einlaß aber nun bei unterschiedlichen Maschinen beispielsweise aus Gründen der Raumersparnis in unterschiedlichen Stellungen zum Meßgerät aufweisen. Entsprechend ist entweder der die Saugpumpe und den Auslaßstutzen verbindende Schlauch abzuwinkeln, was sich nachteilig auf die Flüssigkeitsförderung auswirken kann oder aber es müssen verschiedene Meßgeräte mit unterschiedlich angeordneten Auslaßstutzen zur Verfügung stehen, um diese dann entsprechend über den Schlauch mit der Maschine verbinden zu können.

Der Erfindung liegt daher die Aufgabe zugrunde, ein Meßgerät der eingangs genannten Art zu schaffen, bei dem der Auslaßstutzen einfach und zuverlässig in unterschiedlichen Richtungen am Meßgerät angeordnet werden kann, ohne daß dabei die Meßgenauigkeit verringert wird.

Erfindungsgemäß wird die genannte Aufgabe durch ein Durchflußmeßgerät der eingangs genannten Art dadurch gelöst, daß das Ober- und Unterteil derart lösbar durch einen Bajonettverschluß miteinander verbindbar sind, daß der Auslaßstutzen in vier zueinander symmetrisch versetzten Stellungen am Meßgehäuse anordbar ist. Entsprechend kann das Oberteil einfach vom Unterteil gelöst und durch Einrasten bei entsprechender Ausrichtung des Auslaßstutzens einfach wieder am Meßgehäuseunterteil befestigt werden. Da die meisten Gehäuse kreisförmig oder aber quadratisch in ihrem Querschnitt ausgebildet sind, kann so bei derartigen Durchflußmeßgeräten einfach durch Drehen des Gehäuseoberteils und damit des Auslaßstutzens die notwendige Ausrichtung gegenüber dem Einlaß der Saugpumpe und damit der Maschine erreicht werden, ohne daß hierbei ein Abwinkeln des Verbindungsschlauches mit den damit verbundenen Nachteilen notwendig ist. Gleichzeitig wird hierbei der Vorteil einer Anordnung des Auslaßes im Gehäuseoberteil bezüglich austretender Luft in das Gerät beibehalten, wodurch die Meßgenauigkeit erhalten bleibt.

Vorzugsweise ist der Einlaßstutzen am Unterteil des Meßgehäuses ortsfest angeordnet. Entsprechend kann der Auslaßstutzen in verschiedenen Stellungen gegenüber dem Einlaß der Saugpumpe ausgerichtet werden, was insbesondere zu einer raumsparenden Anordnung von Flüssigkeitsbehälter, Meßgerät, Saugpumpe und nachfolgender Kaffee- oder Espresso-Maschine beitragen kann.

Der Bajonettverschluß ist in Weiterbildung am Gehäuseunterteil durch vier symmetrisch angeordnete, radial vorstehende Haken gebildet, die in entsprechende Rastaufnahmen des Oberteils zum Verschließen des Gehäuses einführbar sind. Die Haken können dabei nach außen oder aber nach innen radial vorstehen. Bevorzugt sind die Haken aber sich radial nach außen erstreckend am Umfangsrand des Gehäuseunterteils angeordnet. Die Rastaufnahmen werden hierzu durch an der Innenseite eines peripher am Gehäuseoberteil umlaufenden, nach unten gerichteten Randes radial nach innen ragende Vorsprünge gebildet, die seitlich in gleicher Drehrichtung, der Verschließrichtung, des Gehäuseoberteils durch Anschläge begrenzt sind. Aufgrund dieser vierzähligen Anordnung und Ausbildung der Haken sowie Rastaufnahmen ist so für ein optimales Verdrehen des Gehäuseoberteils und damit des Auslaßstutzens gesorgt. Auch können derartige Haken einfach und zuverlässig am quadratischen oder kreisförmigen Gehäuseunterteil angeordnet werden.

Damit die Haken einfach und zuverlässig in die Rastaufnahmen einführbar sind, verjüngen sich die Haken vorzugsweise an ihrer Unterseite jeweils in gleicher Drehrichtung, der Schließrichtung des Bajonettverschlusses, ihre axiale Höhe verringernd. Zum Verrasten innerhalb der Rastaufnahmen weisen sie an ihrer Unterseite im wesentlichen radial verlaufende, axial nach unten vorspringende Zapfen auf, die mit komplementär hierzu ausgebildeten Aufnahmen der Rastaufnahmen zusammenwirken. Bei den Aufnahmen handelt es sich dabei vorzugsweise um an der Oberseite der Vorsprünge ausgebildete Ausnehmungen. Diese sind im wesentlichen rinnenförmig ausgebildet und zum zuverlässigen Einrasten und damit Verschließen des Bajonettverschlusses jeweils im Bereich der den Anschlägen abgewandten Enden der Vorsprünge ausgebildet.

In bevorzugter Ausgestaltung ist auch hier vorgesehen, daß die Auslaßöffnung oberhalb des Meßkörpers angeordnet ist. Entsprechend tritt keine Beeinflussung beim Messen der Durchflußmenge durch den Meßkörper, bei dem es sich herkömmlich um ein Flügelmeßrad handeln kann, auf. Vorteilhaft ist die Auslaßöffnung dabei seitlich auch eng benachbart der Längsmittelachse des Meßgehäuses angeordnet. Hierdurch wird zum einen bei Verwendung eines Flügelmeßrades als Meßkörper erreicht, daß die Luft schnell austreten kann, da die eintretende Flüssigkeit sich aufgrund entstehender Zentrifugalkräfte zunächst am äußeren Umfang des Gehäuses sammelt und die verbleibende Luft jeweils nach innen gedrückt wird. Zum anderen wird die Anordnung und Ausrichtung der Auslaßöffnung gegenüber dem Meßkörper auch bei Drehen des Gehäuseoberteils nicht verändert, so daß keinerlei Beeinträchtigung der Meßgenauigkeit eintritt.

In Weiterbildung ist vorgesehen, daß Einlaß- und Auslaßstutzen seitlich des Meßgehäuses horizontal parallel zueinander verlaufend angeordnet sind. Auf diese Weise kann auch der Verbindungsschlauch, der beispielsweise aus Silikon besteht, horizontal am Auslaßstutzen festgelegt werden und es ist keine Abwinkelung des Schlauches notwendig, wodurch sich Knickstellen ergeben könnten, die eine Beeinträchtigung beim Ansaugen darstellen würden. Das Schlauchstück kann aufgrund seiner horizontalen Anordnung dann auch sehr hohem Saugdruck durch Zusammenziehen des Schlauches nachgeben, so daß nicht der gesamte Unterdruck auf die Pumpe ausgeübt wird, und dehnt sich bei geringerem Saugdruck in den Pumppausen der Pumpe aufgrund seiner Eigenelastizität wieder auf seine volle Durchlaßbreite aus und saugt damit in verstärktem Maße Flüssigkeit aus dem Durchflußmeßgerät nach. Da hierbei keine Knickstellen vorliegen, wird so eine Vergleichmäßigung des Saugdrucks auf das Durchflußmeßgerät bzw. eine geringere Druckwelligkeit im Bereich des Durchflußmeßgeräts erzielt.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:
- Figur 1: eine Darstellung einer bevorzugten Ausführungsform des erfindungsgemäßen Durchflußmeßgerätes in Seitenansicht;
- Figur 2: eine schematische Darstellung des Meßgerätes aus Figur 1 bei Anschluß an eine Pumpe sowie einen Flüssigkeitsbehälter;
- Figur 3: eine Draufsicht auf das Gehäuseunterteil des Durchflußmeßgerätes ohne Gehäuseoberteil;
- Figur 4a: eine vergrößerte Ansicht in Richtung des Pfeils D aus Figur 3;
- Figur 4b: eine Draufsicht auf den Haken aus Figur 4a;
- Figur 5: eine Draufsicht auf das Gehäuseoberteil
- ohne daran festgelegtes Gehäuseunterteil;
- Figur 6a: eine vergrößerte Ansicht des Details X aus Figur 5;
- Figur 6b: einen Schnitt entlang der Linie D-D aus Figur 6a;
- Figur 7: eine Unteransicht des Gehäuseoberteils aus Figur 5; und
- Figuren 8 - 11: unterschiedliche Stellungen des Auslaßstutzens gegenüber dem Einlaßstutzen bei Draufsicht auf das erfindungsgemäße Durchflußmeßgerät aus Figur 1.

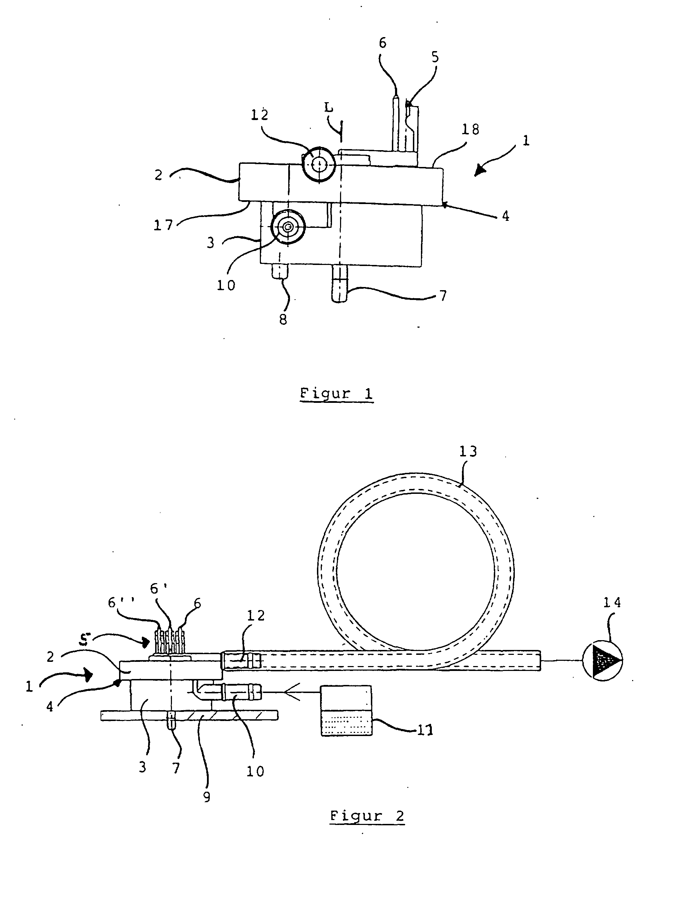

Das in der Figur 1 dargestellte Durchflußmeßgerät 1 zum Messen des Durchflusses von Flüssigkeiten für eine Vorrichtung zum Bereiten von Getränken, insbesondere einer Kaffee- oder Espresso-Maschine weist ein Gehäuse 4 aus einem Gehäuseoberteil 2 sowie einem Gehäuseunterteil 3 auf, welche mittels eines in Figur 1 nicht dargestellten Bajonettverschlusses lösbar aneinander festlegbar sind. Im Inneren des topfförmig ausgebildeten Gehäuseunterteils 3 des Meßgehäuses 4 ist zentral ein nicht dargestellter Meßkörper, insbesondere ein Flügelrad drehbar auf einem Lagerstift 27 gelagert und wird durch die durch das Unterteil 3 des Meßgehäuses 4 fließende Flüssigkeit in Drehung versetzt und derart über eine Meßelektronik die Messung bewirkt. Hierzu sind beispielsweise am drehbar gelagerten Flügelrad auf bekannte Weise Dauermagnete eingesetzt, über die bei Drehung des Flügelrades induktiv eine Spannung erzeugt wird (beispielsweise über eine Spule im Oberteil 2), deren durch die Umlaufgeschwindigkeit des Flügelrads gegebene Größe ein Maß für den Durchfluß durch das Gehäuse 4 ist. Oder aber die Messung erfolgt mittels Hall ICs unter Ausnutzungs des Hall-Effektes. Um nun die mittels des Meßkörpers gemessenen Signale an eine Steuer- und Verarbeitungseinrichtung weiterleiten zu können, ist an der Oberseite, insbesondere an der Stirnseite des Oberteils 2 ein Steckeranschluß 5 mit vorzugsweise drei Steckzungen 6, 6', 6'' angebracht. Eine dieser Steckzungen 6" dient als positiver Pol zur Speisung, eine andere 6' als Minuspol und Masse und die Dritte 6 als Signal-Ausgang zur Weiterleitung des gemessenen Signals.

An der Unterseite des Gehäuseunterteils 3 sind Elemente 7, 8 zur Festlegung des Meßgerätes 1 an einer Halterung 9 (Figur 2) angeordnet. Das Festlegen kann dabei über entsprechend ausgebildete Klemmscheiben erfolgen.

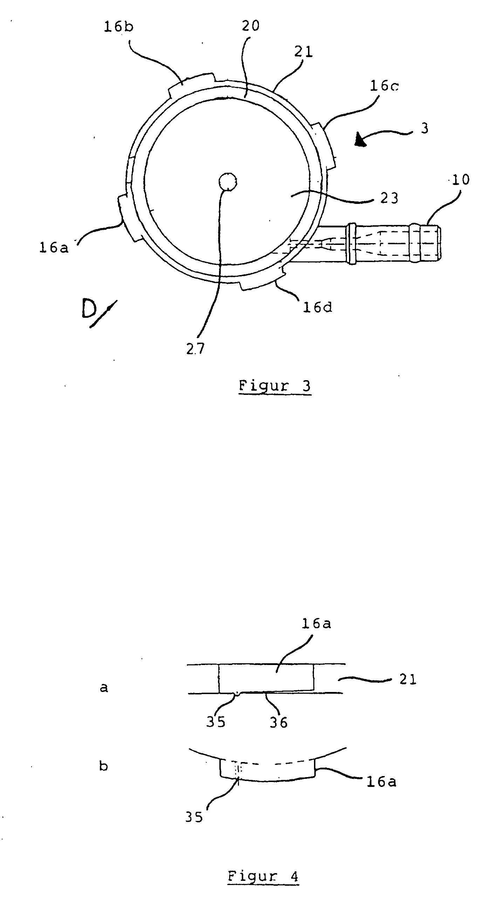

Zur Abdichtung von Gehäuseober- und unterteil 2, 3 ist ein O-Ring vorgesehen, der an der Oberseite 20 (Figur 3) der Zylinderwandung des Gehäuseunterteils 3, von einem außen am Gehäuse 4 umlaufenden Rand 21 umgeben, aufsetzbar ist.

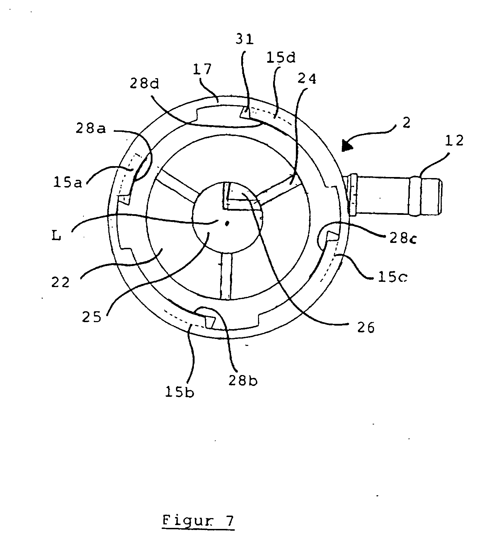

Das Gehäuseoberteil 2 weist (siehe Figur 7) zum einen einen sich nach unten erstreckenden ringförmigen Ansatz 22 auf, mittels dessen das Oberteil 2 im wesentlichen reibschlüssig in den topfförmigen Hohlraum 23 des Gehäuseunterteils 3 einsetzbar ist. Der O-Ring befindet sich dann seitlich des Ansatzes, diesen umschließend. An der Unterseite ist der Ansatz 22 mit drei symmetrisch angeordneten Staurippen 24 versehen. Innerhalb des ringförmigen Ansatzes 22 ist ein ebenfalls topfförmiger Hohlraum 25 ausgebildet, der zur Aufnahme des oberen Teils des Meßkörpers dient.

Radial beabstandet zum ringförmigen Ansatz 22 ist peripher am Gehäuseoberteil 2 ein umlaufender, sich nach unten erstreckender Rand 17 vorgesehen, der das Gehäuseunterteil 3 nach Aufsetzen auf dieses außenseitig umgibt.

Am Unterteil 3 des Gehäuses 4 ist ein Einlaßstutzen 10 angeordnet, der seitlich am Gehäuseunterteil 3 horizontal verlaufend festgelegt ist. Über diesen, seinen Innendurchmesser in Richtung des Hohlraums 25 verringernden Einlaßstutzen 10 (siehe Figur 3) strömt die von einem Flüssigkeitsbehälter 11 (Figur 2) stammende Flüssigkeit senkrecht zur Drehachse des Flügelmeßrades in das Gehäuse 1 ein. Am Gehäuseoberteil 2 ist ein Auslaßstutzen 12 festgelegt, dessen Öffnung 26 oberhalb des Meßkörpers im Inneren des Gehäuses 4 seitlich aber eng benachbart zur Längsmittelachse L des Meßgehäuses 4 angeordnet ist (Figur 1). Der Auslaßstutzen 12 verläuft dabei bei gleichbleibendem Innendurchmesser durch den Deckel 18 des Gehäuseoberteils 2 hindurch, zumindest hälftig im Gehäuseoberteil 2 eingebettet, um 90° gegenüber der Längsmittelachse L abgewinkelt, um seitlich des Gehäuses 4 horizontal parallel zum Einlaßstutzen 10 zu verlaufen. Während der Auslaßstutzen 12 eng benachbart seitlich der Längsmittelachse L angeordnet ist, befindet sich der Einlaßstutzen 10 seitlich versetzt zur Längsmittelachse L am Gehäuse 4, damit die Flüssigkeit nahezu tangential zu den Meßflügeln des Meßkörpers in das Gehäuse 4 einströmen kann.

Der Auslaßstutzen 12 ist (Figur 2) über eine flexible Verbindung, wie einen Silikonschlauch 13, mit einer Vakuumpumpe 14 verbunden. An diese kann sich dann ein Behandlungsgerät für die Flüssigkeit, wie ein Durchlaufer hitzer für eine Kaffee- oder Espresso-Maschine anschließen.

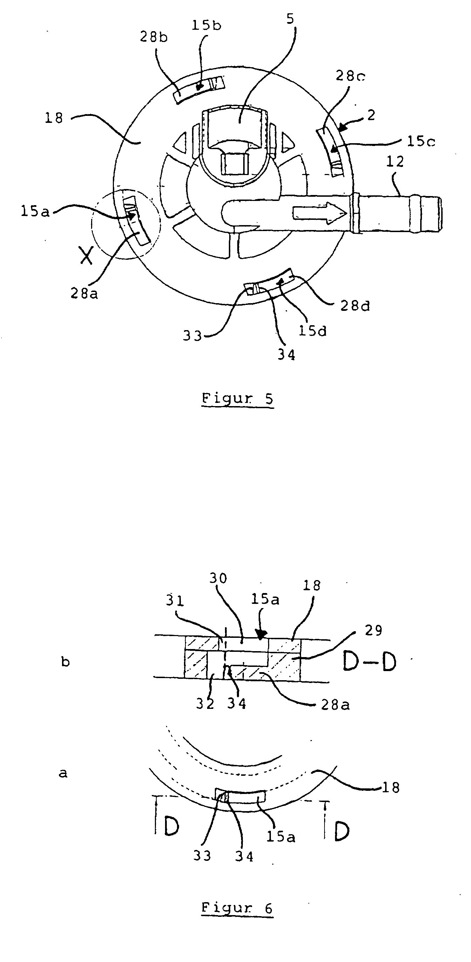

Zur Ausbildung eines Bajonettverschlusses weist das Gehäuseunterteil 3 vier aus den Figuren 3 sowie 4a und 4b ersichtliche symmetrisch angeordnete, radial nach außen vorspringende Haken 16a-d auf, die in entsprechende Rastaufnahmen 15a-d des Gehäuseoberteils 2 (Figuren 5-7) eingreifen, so daß durch Relativdrehen von Unterteil 3 und Oberteil 2 zueinander ein bajonettartiges Verschließen erfolgt. Die Rastaufnahmen 15a-d sind durch vier jeweils symmetrisch an der Innenseite des Randes 17 radial nach innen ragende, vom Deckel 18 des Gehäuseoberteils 2 beabstandete Vorsprünge 28a-d gebildet, die jeweils in gleicher Drehrichtung des Gehäuseoberteils 2, der Verschließrichtung, seitlich durch einen Anschlag 29 begrenzt sind. Zwischen den zueinander gleichmäßig beabstandeten Vorsprüngen 28a-d sind Einführöffnungen 32 ausgebildet, aufgrund derer die Haken 16a-d in die Rastaufnahmen 15a-d einführbar sind. Nach oben sind die Rastaufnahmen 15a-d durch den Gehäusedeckel 18 begrenzt, so daß ein Anschlag beim Einführen der Haken 16a-d nach oben gebildet ist. Um auch von außen feststellen zu können, ob das Verrasten erfolgt bzw. erfolgt ist, sind oberhalb der Vorsprünge Öffnungen 30 im Deckel 18 ausgebildet. Die Öffnungen 30 erstrecken sich dabei in Umfangsrichtung über das Ende der Vorsprünge 28a-d hinaus, so bei Aufsetzen des Gehäuseoberteils 2 auf das Unterteil 3 eine Lücke 31 verbleibt, die erst bei Verrasten durch die Haken 16a-d nach außen verschlossen wird.

Im Bereich ihrer den Anschlägen 29 abgewandten Enden 33, die gegenüber der Radialrichtung abgeschrägt nach innen verlaufen, sind die Vorsprünge 28a-d jeweils mit einer radial verlaufenden Ausnehmung 34 an ihrer Oberseite versehen. In die Ausnehmungen 34 können die Haken 16a-d mit komplementär ausgebildeten Zapfen 35 verrastend eingreifen. Die Zapfen 35 sind hierzu an der Unterseite 36 der Haken in Form eines Wulstes ausgebildet und erstrecken sich ebenfalls in Radialrichtung.

Wie insbesondere aus Figur 4b ersichtlich ist, verringern die Haken 16a-d in Verschließrichtung des Verschlusses ihre axiale Höhe. Dies erfolgt durch Verjüngung an der Unterseite 36 in Drehrichtung. Hierdurch erleichtert sich das Einführen der Haken 16a-d in die Rastaufnahmen 15a-d.

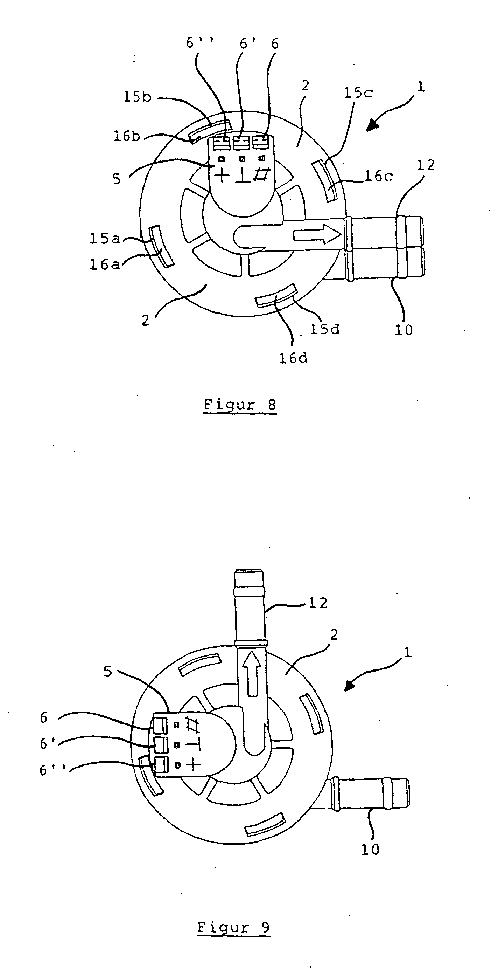

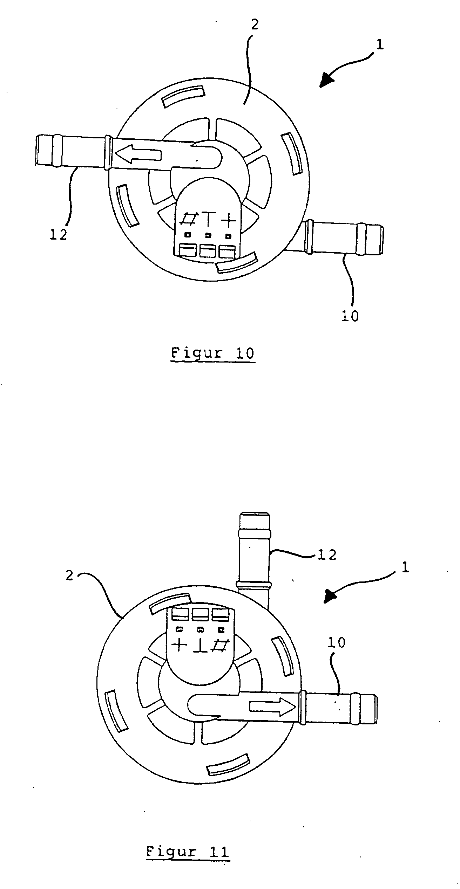

Aufgrund dieses erfindungsgemäßen Bajonettverschlusses kann das Gehäuseoberteil 2 mit dem daran angeordneten Auslaßstutzen 12 einfach vom Gehäuseunterteil 3 gelöst werden, um den Auslaßstutzen 12, wie aus den Figuren 8-11 ersichtlich ist, gegenüber dem Einlaßstutzen 10 in verschiedenen Stellungen, die jeweils um 90° gegeneinander versetzt sind, auszurichten.

## Patentansprüche

1. Durchflußmeßgerät zum Messen von Durchflußmengen in Flüssigkeiten, insbesondere für eine Vorrichtung zum Bereiten von Getränken wie Kaffee- oder Espresso, mit einem aus Ober- (2) und Unterteil (3) bestehenden Meßgehäuse mit Ein- (10) und Auslaßstutzen (12) sowie einem im Inneren des Gehäuses angeordneten Meßkörper zur Bestimmung des Durchflusses der Flüssigkeit, wobei der Auslaßstutzen (12) am Oberteil (2) des Meßgehäuses angeordnet ist, **dadurch gekennzeichnet, daß** das Ober- (2) und Unterteil (3) derart lösbar durch einen Bajonettverschluß (15 a - d, 16 a - d) miteinander verbindbar sind, daß der Auslaßstutzen (12) in vier zueinander symmetrisch versetzten Stellungen am Meßgehäuse (1) anordbar ist.

2. Meßgerät nach Anspruch 1, **dadurch gekennzeichnet, daß** der Einlaßstutzen (10) am Unterteil (3) des Meßgehäuses (1) ortsfest angeordnet ist.

3. Meßgerät nach Anspruch 1 oder 2, **dadurch gekennzeichnet, daß** der Bajonettverschluß (15 a - d, 16 a - d) am Gehäuseunterteil (3) durch vier symmetrisch angeordnete, radial vorstehende Haken (16 a - d) gebildet ist, die in entsprechende Rastaufnahmen (15 a - d) des Oberteils (2) zum Verschließen des Gehäuses (1) einführbar sind.

4. Meßgerät nach Anspruch 3, **dadurch gekennzeichnet, daß** die Haken (16 a- d) sich radial nach außen erstreckend am Umfangsrand des Gehäuseunterteils (3), angeordnet sind.

5. Meßgerät nach Anspruch 3 oder 4, **dadurch gekennzeichnet, daß** die Haken (16a-d) sich an ihrer Unterseite (36) jeweils in gleicher Drehrichtung, ihre axiale Höhe verringernd, verjüngen.

6. Meßgerät nach einem der Ansprüche 3 bis 5, **dadurch gekennzeichnet, daß** die Haken (16a-d) an ihrer Unterseite (36) im wesentlichen radial verlaufende, axial nach unten vorspringende Zapfen (35) aufweisen, die mit komplementär hierzu ausgebildeten Aufnahmen (34) der Rastaufnahmen (15a-d) zusammenwirken.

7. Meßgerät nach einem der Ansprüche 3 bis 6, **dadurch gekennzeichnet, daß** die Rastaufnahmen (15 a - d) durch an der Innenseite eines peripher am Gehäuseoberteil (2) umlaufenden, nach unten gerichteten Randes (17) radial nach innen ragende Vorsprünge (28a-d) gebildet sind, die seitlich in gleicher Drehrichtung des Gehäuseoberteils (2) durch Anschläge (29) begrenzt sind.

8. Meßgerät nach Anspruch 6 oder 7, **dadurch gekennzeichnet, daß** die Aufnahmen (34) an der Oberseite der Vorsprünge (28a-d) ausgebildete Ausnehmungen sind.

9. Meßgerät nach Anspruch 8, **dadurch gekennzeichnet, daß** die Ausnehmungen (34) im wesentlichen rinnenförmig ausgebildet sind.

10. Meßgerät nach Anspruch 8 oder 9, **dadurch gekennzeichnet, daß** die Ausnehmungen (34) jeweils im Bereich der den Anschlägen (29) abgewandten Enden (33) der Vorsprünge (28a-d) ausgebildet sind.

11. Meßgerät nach einem der Ansprüche 1 bis 10, **dadurch gekennzeichnet, daß** die Auslaßöffnung des Auslaßstutzens (12) oberhalb des Meßkörpers angeordnet ist.

12. Meßgerät nach Anspruch 11, **dadurch gekennzeichnet, daß** die Auslaßöffnung seitlich aber eng benachbart der Längsmittelachse (L) des Meßgehäuses (1) angeordnet ist.

13. Meßgerät nach einem der Ansprüche 1 bis 12, **dadurch gekennzeichnet, daß** der Einlaß- und Auslaßstutzen (10, 12) seitlich des Meßgehäuses (1) horizontal parallel zueinander verlaufend angeordnet sind.

## Claims

1. Flowmeter for measuring liquid flow quantities, particularly for an apparatus for the preparation of beverages such as coffee or espresso with a measuring casing comprising an upper part (2) and a lower part (3) and provided with an inlet connection (10) and outlet connection (12), as well as a measuring body located in the interior of the casing for determining the liquid flow, the outlet connection (12) being positioned on the upper part (2) of the measuring casing, **characterized in that** the upper part (2) and lower part (3) are so detachably interconnectable by a bayonet catch (15a-d, 16a-d) that the outlet connection (12) can be placed in four mutually symmetrically displaced positions on the measuring casing (1).

2. Flowmeter according to claim 1, **characterized in that** the inlet connection (10) is positioned in fixed manner on the lower part (3) of the measuring casing (1).

3. Flowmeter according to claims 1 or 2, **characterized in that** the bayonet catch (15a-d, 16a-d) on the casing lower part (3) is formed by four symmetrically positioned, radially projecting hooks (6a-d), which can be introduced into corresponding locking receptacles (15a-d) of the upper part (2) for closing the casing (1).

4. Flowmeter according to claim 3, **characterized in that** the hooks (16a-d) are arranged in radially outwardly extending manner on the circumferential rim of the casing lower part (3).

5. Flowmeter according to claim 3 or 4, **characterized in that** the hooks (16a-d) taper so as to reduce their axial height on their underside (36), in each case in the same rotational direction.

6. Flowmeter according to one of the claims 3 to 5, **characterized in that**, on their underside (36), the hooks (16-d) have substantially radially directed, axially downwardly projecting pins (35) cooperating with receptacles (34) of the locking receptacles (15a-d) constructed in complimentary manner thereto.

7. Flowmeter according to one of the claims 3 to 6, **characterized in that** the locking receptacles (15a-d) are formed by radially inwardly projecting projections (28a-d) on the inside of a downwardly directed edge (17) passing peripherally around the casing upper part (2) and which are laterally bounded by stops (29) in the same rotational direction of the casing upper part (2).

8. Flowmeter according to claim 6 or 7, **characterized in that** the receptacles (34) are recesses formed on the top of the projections (28a-d).

9. Flowmeter according to claim 8, **characterized in that** the recesses (31) have essentially a channel-shape.

10. Flowmeter according to claim 8 or 9, **characterized in that** the recesses (34) are in each case formed in the vicinity of the ends (33) of the projections (28a-d) remote from the stops (29).

11. Flowmeter according to one of the claims 1 to 10, **characterized in that** the outlet opening of the outlet connection (12) is located above the measuring body.

12. Flowmeter according to claim 11, **characterized in that** the outlet opening is positioned laterally, but very close to the median longitudinal axis (L) of the measuring casing (1).

13. Flowmeter according to one of the claims 1 to 12, **characterized in that** the inlet and outlet connections (10, 12) are positioned horizontally and parallel to one another laterally of the measuring casing (1).

## Revendications

1. Débitmètre pour mesurer le débit de passage de liquides, en particulier pour un dispositif de préparation de boissons telles cafés ou expressos, comprenant un boîtier de mesure comportant une partie supérieure (2) et une partie inférieure (3) présentant un embout d'entrée (10) et un embout de sortie (12) ainsi qu'un élément de mesure disposé à l'intérieur du boîtier pour déterminer le débit du liquide, l'embout de sortie (12) étant disposé sur la partie supérieure (2) du boîtier de mesure, **caractérisé en ce que** les parties supérieure (2) et inférieure (3) dissociables peuvent être assemblées par un joint à baïonnette (15 a - d, 16 a - d) de telle façon que l'embout de sortie (12) puisse être disposé en quatre positions décalées symétriquement entre elles sur le boîtier de mesure (1).

2. Débitmètre selon la revendication 1, **caractérisé en ce que** l'embout d'entrée (10) est monté fixe sur la partie inférieure (3) du boîtier de mesure (1).

3. Débitmètre selon la revendication 1 ou 2, **caractérisé en ce que** le joint à baïonnette (15 a - d, 16 a - d) sur la partie inférieure (3) du boîtier est constitué par quatre talons de verrouillage (16 a - d) en saillie radiale disposés symétriques, pouvant être introduits dans des logements d'encliquetage (15 a - d) de la partie supérieure (2) pour verrouiller le boîtier (1).

4. Débitmètre selon la revendication 3, **caractérisé en ce que** les talons de verrouillage (16 a - d) sont disposés en extension radiale vers l'extérieur sur le pourtour périphérique de la partie inférieure (3) du boîtier.

5. Débitmètre selon la revendication 3 ou 4, **caractérisé en ce que** les talons de verrouillage (16a-d) se rétrécissent à leur partie inférieure (36) chacun dans le même sens de rotation, en diminuant leur hauteur axiale.

6. Débitmètre selon l'une quelconque des revendications 3 à 5, **caractérisé en ce que** les talons de verrouillage (16a-d) présentent à leur extrémité inférieure (36) des tétons (35) s'étendant sensiblement radialement, en saillie axiale vers le bas, coopérant avec des logements (34) des logements d'encliquetage (15a-d) conformés en correspondance avec cestétons.

7. Débitmètre selon l'une quelconque des revendications 3 à 6, **caractérisé en ce que** les logements d'encliquetage (15 a - d) sont constitués par des épaulements (28a-d) en saillie radiale vers l'intérieur sur la face interne d'un bord (17) périmétrique à la partie supérieure (2) du boîtier, dirigé vers l'intérieur, limités latéralement dans le même sens de pivotement de la partie supérieure (2) du boîtier par des butées (29).

8. Débitmètre selon la revendication 6 ou 7, **caractérisé en ce que** les logements (34) sont des évidements ménagés dans la face supérieure des saillies (28a-d).

9. Débitmètre selon la revendication 8, **caractérisé en ce que** les évidements (34) sont sensiblement en forme de canal.

10. Débitmètre selon la revendication 8 ou 9, **caractérisé en ce que** les évidements (34) sont ménagés dans la zone respective des extrémités (33) opposées aux butées (29) des épaulements (28a-d).

11. Débitmètre selon l'une quelconque des revendications 1 à 10, **caractérisé en ce que** l'ouverture de sortie de l'embout de sortie (12) est disposée en amont de l'élément de mesure.

12. Débitmètre selon la revendication 11, **caractérisé en ce que** l'ouverture de sortie est disposée latéralement mais à proximité immédiate de l'axe médian longitudinal (L) du boîtier de mesure (1).

13. Débitmètre selon l'une quelconque des revendications 1 à 12, **caractérisé en ce que** les embouts d'entrée et de sortie (10, 12) sont disposés latéralement par rapport au boîtier de mesure (1) en extension horizontale parallèles l'un à l'autre.
